# EUROPEAN PATENT APPLICATION

(11) **EP 1 489 840 A2**
(43) Date of publication of application: **22.12.2004**
(21) Application number: 04102188.2
(22) Date of filing: 18.05.2004
(51) Int. Cl.: H04N 5/64

(54) **Projection Television**

(30) Priority: 19.06.2003 KR 2003039678
(71) Applicant: Samsung Electronics Co., Ltd., Suwon-si, Gyeonggi-Do 442-742 (KR)
(72) Inventor: Kim, Sang-hak, Paldal-ku, Suwon city Kyungki-do (KR)
(74) Representative: Read, Matthew Charles

(57) **Abstract**

A projection television comprising: a screen for displaying a picture; a body casing combining with the screen, a supporting unit provided inside the body casing and supporting the bottom of the screen, and a drain hole formed on the bottom of the supporting unit and discharging moisture permeated into the screen. The projection television discharges the moisture permeated along the screen, thereby preventing the deterioration of the screen.

## Description

The present invention relates to a projection television including a screen comprising a plurality of closely spaced parallel sheets, the spacing of the sheets being such that liquid may be drawn up between them by capillarity.

A known type of projection television comprises CRTs (cathode-ray tubes), a large screen and a mirror that reflects the colour image formed by the CRTs onto the screen.

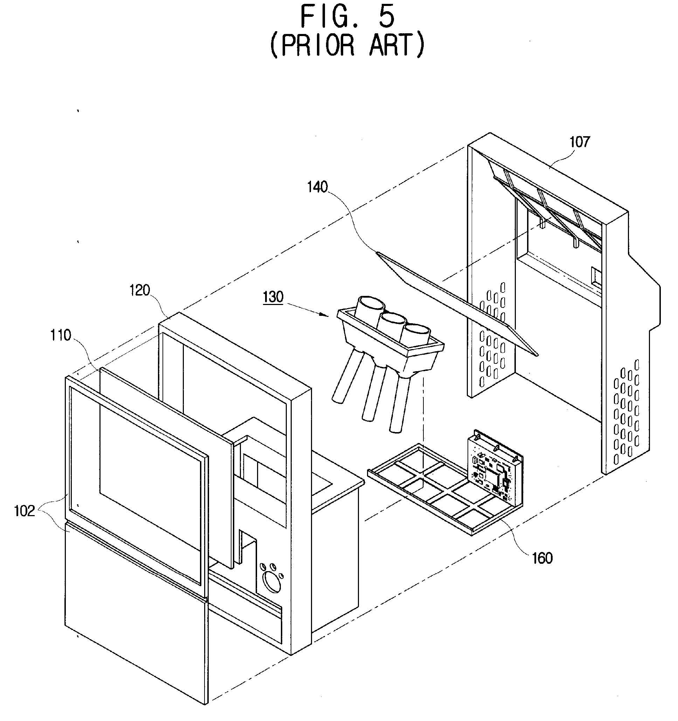

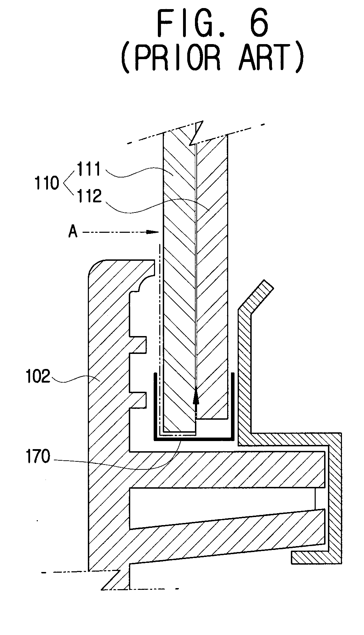

As illustrated in Figures 5 and 6, a known projection television comprises a front casing 102 and a rear casing 107, which together define the external appearance of the television. The television also comprises a wooden chassis 120 to which the front and rear casings 102, 107 are mounted, a CRT assembly 130, supported by the wooden chassis 120, for generating a modulated beam, a screen 110 on which the modulated beam forms an image, a mirror 140 for reflecting the modulated beam onto the screen 110, a plurality of speakers (not shown) installed at the bottom of the front casing 102 and a circuit board 160 provided in the bottom of the wooden chassis 120 for controlling the CRT assembly 130.

The screen 110 comprises a lenticular lens sheet 111 in front of a fresnel lens sheet 112.

The lenticular lens sheet 111 and the fresnel lens sheet 112 are separated by only about 0.1 mm. Consequently, when a user removes dirt from the screen 110 by spraying cleaning liquid in the direction of arrow A in Figure 6, the cleaning liquid may flow down the front face of the screen 110 and then be drawn up between the lens sheets 111, 112 by capillarity. Liquid drawn up between the lens sheets 111, 112 in this way appears as undesirable flecks to the viewer.

A projection television according to the present invention is characterised by bottom edges of the sheets being received in a channel member which has a drain hole. The provision of the drain hole enable liquid, such as cleaning fluid, to drain away, rather than being drawn up between the sheets. The bottom edges of the sheets may also be stepped relative to each other as a further measure against liquid being drawn upwards between them by capillarity.

Preferably, the drain hole is in the floor of the channel member. However, it could be at the bottom of a side wall.

Preferably, the channel member has structures, e.g. steps or shelves, spacing said bottom edges from the floor of the channel member. More preferably, the internal profile of the channel member tapers towards its floor below said bottom edges.

Preferably, said sheets comprise a lenticular lens sheet in front of a fresnel lens sheet.

Additional preferred and optional features are set forth in claims 6 to 23 appended hereto.

An embodiment of the present invention will now be described, by way of example, with reference to the accompanying drawings, in which:
Figure 1 is a perspective view of a projection television according to the present invention;
Figure 2 is an exploded perspective view of the rear of the screen assembly part of the television shown in Figure 1;
Figure 3 is a perspective view of the rear of the upper cover and the screen assembly part of Figure 2;
Figure 4 is an enlarged sectional view showing a main part of the upper cover and the screen assembly part;
Figure 5 is an exploded perspective view of a known projection television;
Figure 6 is an enlarged sectional view of a screen assembly part of the television in Figure 5.

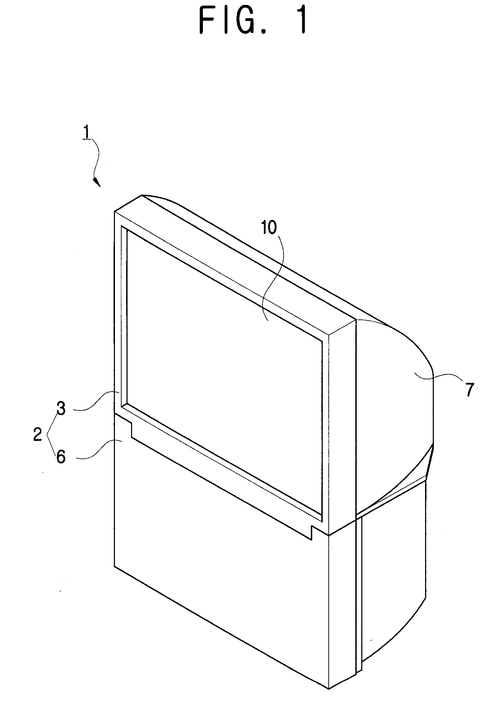

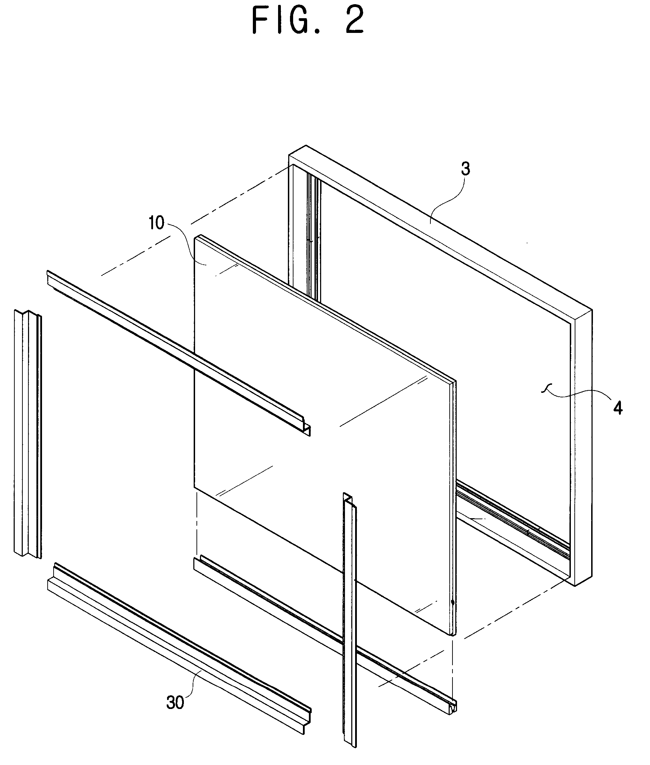

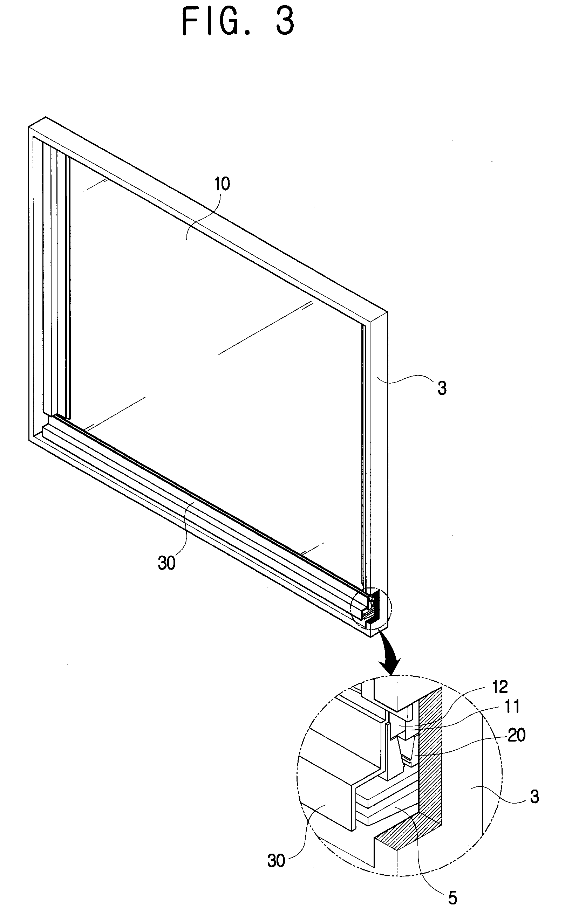

Referring to Figures 1 to 4, a projection television according to the present invention comprises a body casing 1, defining the external appearance of the television and comprising a front casing 2 and a rear casing 7, a CRT assembly (not shown) installed inside the body casing 1 for generating a modulated beam, a screen 10 provided in the front casing 2 for displaying a picture formed by the modulated beam from the CRT assembly and a mirror (not shown) for directing the modulated beam onto the screen 10.

The screen 10 comprises a lenticular lens sheet 11 in front of a fresnel lens sheet 12. The lens sheets 11, 12 are separated by a small gap of only about 0.1mm.

The front casing 2 comprises a frame 3, having an opening 4 in which the screen 10 is mounted, and a panel 6 below the frame 3 and behind which a plurality of speakers (not shown) are mounted.

The frame 3 has an internal, transverse rib 5 which projects backwards below the opening 4 and supports the screen 10 and held in place by a bracket 30 which is attached to the rib 5. The bottom edge of the screen 10 is held in a channel member 20 which rests on the rib 5.

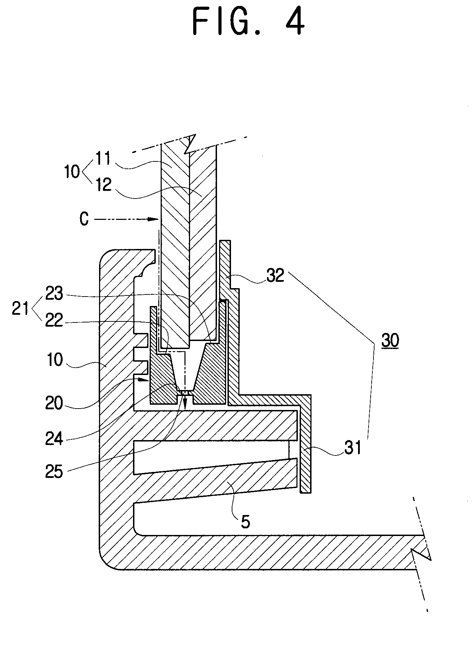

The channel member 20 has an upper part 21 comprising front and back steps 22, 23 on which respective lens sheets 11, 12 rest when the screen 10 has been pushed into place, and a lower part 24 which tapers internally and has a line of drain holes 25 through its floor. The front step 22 is lower than the back step 23 and the lenticular lens sheet 11 projects below the fresnel lens sheet 12. Cleaning liquid or water, sprayed onto the screen 10 in the direction of arrow C in Figure 4, flows down the screen and into the channel member 20, from where it can drain through the holes in its floor.

The lower part 24 is tapered internally, i.e. has sloping sides, so that the moisture permeating through a gap between the frame 3 and the lenticular lens sheet 11, accumulates on the front step 22, flows downward along one of the sloped sides of the lower part 24 and drains away through the drain holes 25.

The screen supporting bracket 30 is made of a rigid material to support the rear of the screen 10 and is connected to the supporting rib 5. The screen supporting bracket 30 comprises a connecting part 31, formed with a shape corresponding to that of the supporting rib 5, for connection to the supporting rib 5 and a contacting part 32, extending upward from the combining part 31 to support the screen 10 and contact the back of the screen 10 or the fresnel lens sheet 12.

The process of assembling the upper cover 3 and the screen 10 will now be described.

The screen 10 is installed on the supporting rib 5 of the frame 3 so that the screen 10 is exposed to the outside through the opening 4. The bottom of the screen 10 is inserted into the upper part 21 of the channel member 20. The lenticular lens sheet 11 rests on the front step 22 and the fresnel lens sheet 12 rests on the back step 23.

The screen supporting bracket 30 is connected to the supporting rib 5. When the connecting part 31 of the screen supporting bracket 30 is connected to the rib 5, the contacting part 32 contacts the fresnel lens sheet 12 and supports the screen 10 from the rear.

In the state described above, when a user sprays moisture such as cleaning liquid or water toward the screen 10 to remove dirt from the surface of the screen 10, the moisture permeates into the gap between the frame 3 and the lenticular lens sheet 11 and flows downward along the surface of the lenticular lens sheet 11. The moisture then flows onto the front step 22 and into the lower part 24 of the channel member 20, from where it drains away through the drain holes 25.

As described above, in a projection television according to the present invention, at least one drain hole 25 is formed in a channel member 20 supporting the screen 10 to prevent moisture being drawn up between the lens sheets 11, 12 by capillarity as appearing as flecks to viewers.

## Claims

1. A projection television including a screen (10) comprising a plurality of closely spaced parallel sheets (11, 12), the spacing of the sheets (11, 12) being such that liquid may be drawn up between them by capillarity, **characterised by** bottom edges of the sheets (11, 12) being received in a channel member (20) which has a drain hole (25).

2. A television according to claim 1, wherein the drain hole (25) is in the floor of the channel member (20).

3. A television according to claim 1 or 2, wherein the channel member (20) has structures (21, 22) spacing said bottom edges from the floor of the channel member (20).

4. A television according to claim 3, wherein the internal profile of the channel member (20) tapers towards its floor below said bottom edges.

5. A television according to any preceding claim, wherein said sheets (11, 12) comprise a lenticular lens sheet (11) in front of a fresnel lens sheet (12).

6. A projection television comprising:
a screen displaying a picture;
a body casing forming an outer appearance of the projection television and combining with the screen;
a supporting unit provided on an inside of the body casing and supporting a bottom of the screen; and
a drain hole formed at a bottom of the supporting unit and discharging moisture permeated into the screen.

7. The projection television of claim 6, wherein the supporting unit comprises an insertion groove in which the bottom of the screen is inserted.

8. The projection television of claim 7, wherein the insertion groove comprises a first insertion groove and a second insertion groove, wherein the first insertion groove is formed at a lower level than the second insertion groove, to discharge the moisture through the drain hole.

9. The projection television of claim 8, wherein the supporting unit further comprises a depression formed in a center of the supporting unit and communicating with the first and second insertion grooves formed on upper parts of the depression, wherein the drain hole is formed at a bottom of the depression.

10. The projection television of claim 6, wherein the screen comprises:
a lenticular lens sheet on a front side of the screen; and
a fresnel lens sheet on a rear side of the screen, wherein the fresnal lens sheet is combined with the lenticular lens sheet.

11. The projection television of claim 7, wherein the screen comprises:
a lenticular lens sheet on a front side of the screen; and
a fresnel lens sheet on a rear side of the screen, wherein the fresnal lens sheet is combined with the lenticular lens sheet.

12. The projection television of claim 9, wherein the screen comprises:
a lenticular lens sheet on a front side of the screen; and
a fresnel lens sheet on a rear side of the screen, wherein the fresnal lens sheet is combined with the lenticular lens sheet.

13. The projection television of claim 12, wherein the body casing comprises:
a front casing comprising:
an upper cover having a front opening through which the screen is exposed and supporting the screen, and
a lower cover provided on a bottom of the upper cover; and
a rear casing combining with a rear of the front casing, wherein a supporting rib protrudes inward on an inside of the upper cover along an edge of the front opening of the upper cover and the supporting unit is provided between a bottom of the screen and the supporting rib.

14. The projection television of claim 13, further comprising a screen supporting bracket combined to the supporting rib to support a rear of the screen.

15. The projection television of claim 14, wherein the screen supporting bracket comprises:
a combining part formed corresponding to a shape of the support rib, to combine the supporting rib with the screen supporting bracket; and
a contacting part extending upward from the combining part, to support the screen and contacting the rear of the screen.

16. The projection television of claim 12, wherein the lenticular lens sheet is inserted into the first insertion groove and the fresnel lens sheet is inserted into the second insertion groove.

17. The projection television of claim 16, wherein a lower end of the lenticular lens sheet is positioned lower than a lower end of the fresnel lens sheet to discharge moisture accumulated on the lenticular lens through the drain hole.

18. The projection television of claim 9, wherein the depression comprises sloped sides wherein moisture accumulates on the first insertion groove and drains downward along one of the sloped sides and is discharged through the drain hole formed at the bottom of the depression.

19. The projection television of claim 18, wherein upper parts of the sloped sides are formed with the first and second insertion grooves, respectively at different heights, and each of the sloped sides have a rectangular-shaped corner to allow a bottom edge of the screen to be positioned in the rectangular-shaped corner when the screen is slidingly inserted downward into the supporting unit of the projection television.

20. The projection television of claim 14, wherein the screen supporting bracket is made of a rigid material to support the rear of the screen.

21. The projection television of claim 13, wherein moisture permeates into a gap between the upper cover and the lenticular lens sheet of the screen and flows downward along a surface of the lenticular lens sheet and reaches the first insertion groove of the supporting unit and is drained to the depression and discharged to an outside of the projection television through the drain hole.

22. The projection television of claim 21, wherein the drain hole prevents the moisture from permeating through a gap between the lenticular lens sheet and the fresnel lens sheet when a user cleans the screen with a cleansing liquid, thereby preventing the projection television from getting flecks on the screen.

23. The projection television of claim 22, wherein the drain hole prevents the moisture from permeating into the gap between the lenticular lens sheet and the fresnel lens sheet and from deteriorating the screen.
